# FASCICULE DE BREVET EUROPEEN

(11) **EP 0 778 424 B1**
(45) Date de publication et mention de la délivrance du brevet: **02.02.2000**
(21) Numéro de dépôt: 96119464.4
(22) Date de dépôt: 04.12.1996
(51) Int. Cl.: F16D 25/08, F16D 25/12, B60T 11/236, F15B 7/08, F16J 15/32

(54) **Cylindre pour un dispositif de commande hydraulique d'un embrayage de véhicule automobile, du type comportant un joint d'étanchéite composite**
Hydraulischer Kupplungsbetätigungszylinder mit Kombinationsdichtung für Kraftfahrzeug
Hydraulic clutch actuation cylinder with a composite seal for a motor vehicle

(30) Priorité: 05.12.1995 FR 9514367
(43) Date de publication de la demande: 11.06.1997
(73) Titulaire: VALEO, 75017 Paris (FR)
(72) Inventeur: Rey, Frédéric, 95210 Saint Gratien (FR)
(74) Mandataire: Gamonal, Didier

(56) Documents cités:
- EP-A- 0 183 900
- EP-A- 0 345 451
- WO-A-95/13206
- DE-A- 3 418 898
- DE-A- 3 816 608
- FR-A- 2 539 195
- US-A- 5 291 974

## Description

L'invention concerne un cylindre émetteur, ou récepteur, d'un dispositif de commande hydraulique d'un embrayage de véhicule automobile, du type comportant un joint d'étanchéité composite.

L'invention concerne plus particulièrement un dispositif de commande hydraulique d'un embrayage de véhicule automobile, du type comportant au moins un cylindre de commande, du type dans lequel le cylindre comporte un corps de cylindre sensiblement tubulaire dans lequel coulisse axialement un piston qui délimite, par une face transversale avant, une chambre hydraulique cylindrique et qui coopère, par une face arrière, avec une tige de piston, et du type dans lequel un orifice de raccordement d'une canalisation débouche dans la chambre hydraulique.

L'art antérieur propose différentes manières de réaliser l'étanchéité entre le piston et le corps de cylindre pour éviter toute fuite de fluide sous pression hors de la chambre hydraulique.

Il est par exemple connu d'utiliser un joint torique porté par le piston et frottant sur la paroi cylindrique de la chambre hydraulique. Ce mode de réalisation présente toutefois l'inconvénient de provoquer des forces de frottement importantes qui s'opposent à un bon coulissement du piston dans le corps de cylindre.

Plus récemment, il a été proposé d'agencer le joint d'étanchéité sur le corps de cylindre et plus particulièrement d'utiliser un joint à lèvre à frottement radial qui coopère avec une paroi latérale cylindrique du piston. Cette solution, si elle permet de réduire notablement les forces de frottement, présente l'inconvénient de recourir à un type de joint qui est plus fragile et dont la mise en place nécessite un outillage spécifique.

L'invention a donc pour but de proposer un moyen de réalisation de l'étanchéité de la chambre hydraulique qui soit simple, fiable, et qui ne s'oppose pas au coulissement du piston par des frottements trop importants.

Dans ce but, l'invention propose un dispositif du type décrit précédemment, selon le document EP-A-345.451 conforme au préambule de la revendication 1, caractérisé en ce qu'il est prévu un joint composite qui est porté par le corps de cylindre et qui coopère avec une paroi latérale cylindrique du piston pour assurer l'étanchéité de la chambre hydraulique, et en ce que le joint composite comporte une bague interne en matériau à faible coefficient de frottement qui est serrée radialement contre la paroi latérale du piston par un anneau externe en matériau élastomère reçu dans un logement du corps principal.

Selon d'autres caractéristiques de l'invention :
- pour une bonne étanchéité de la chambre hydraulique, un bon contrôle du serrage de la bague interne et une bonne coaxialité entre le piston et le corps principal l'anneau externe est monté comprimé radialement dans le logement du corps de cylindre ;
- le logement du joint composite est délimité radialement par une surface cylindrique latérale et axialement, selon une première direction ; par une face axiale qui s'étend radialement vers l'intérieur depuis la surface latérale, et, selon la direction opposée, par une rondelle d'appui qui immobilise axialement le joint composite dans le logement et facilite le montage de celui-ci et l'usinage du corps de cylindre ;
- le corps principal comporte une partie avant, qui délimite la chambre hydraulique, et une partie arrière de diamètre élargi, et les deux parties sont délimitées par une paroi transversale annulaire du corps principal dans laquelle est formée le logement du joint composite ;
- la face axiale du logement du joint composite est agencée à l'avant du logement et la surface cylindrique du logement débouche, à l'arrière, dans une face arrière de la paroi transversale annulaire par une extrémité chanfreinée facilitant la mise en place du joint ;
- la rondelle d'appui comporte sur sa face avant un bossage qui est délimité par une portée conique complémentaire de l'extrémité chanfreinée du logement de sorte que le bossage pénètre dans le logement pour immobiliser axialement le joint composite dans son logement ;
- le bossage de la rondelle d'appui coopère avec l'extrémité chanfreinée du logement pour centrer la rondelle dans le corps principal ;
- pour l'assemblage du cylindre, le joint composite et la rondelle d'appui sont montés sur le piston et le piston est introduit axialement d'arrière en avant dans le corps de cylindre, et le piston et la rondelle sollicitent le joint pour le forcer à l'intérieur de son logement ;
- le tube arrière de guidage du corps de cylindre porte un deuxième joint d'étanchéité qui coopère avec la paroi latérale du piston et qui est agencé axialement à l'arrière du joint composite ;
- le deuxième joint est aussi un joint composite ;
- le deuxième joint est une coupelle d'étanchéité à lèvre à frottement radial ; et
- le corps de cylindre est réalisé en matière plastique et le piston est réalisé en métal.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues en coupe axiale d'un cylindre récepteur conforme aux enseignements de l'invention, dans lequel le piston est représenté respectivement dans une première position avancée et dans une seconde position reculée ; et
- la figure 3 représente une vue agrandie d'un détail de la figure 1.

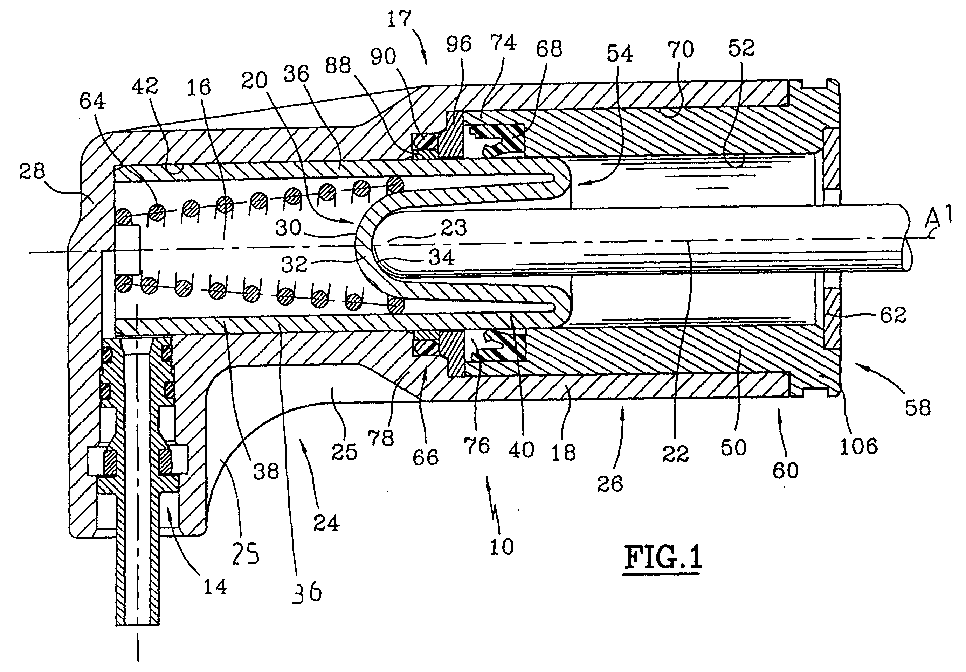

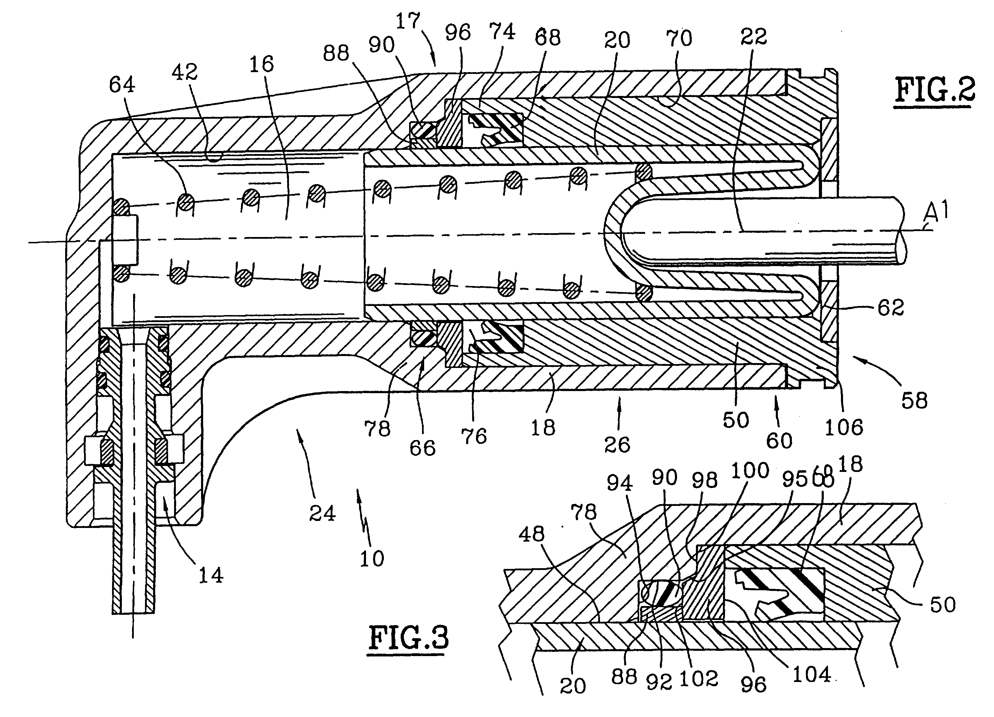

On a représenté sur les figures 1 et 2 un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation qui relie le cylindre émetteur au cylindre récepteur 10.

La canalisation débouche par un orifice d'entrée 14 à l'intérieur d'une chambre hydraulique 16 à volume variable délimitée dans un corps de cylindre 17 en matière plastique du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage.

Le corps de cylindre 17 comporte un corps principal 18, ici en matière plastique, qui présente une forme de tube étagé d'axe A1 et qui comporte une partie avant 24 de diamètre réduit par rapport à une partie arrière 26. Intérieurement la partie 24 a donc un diamètre inférieur à celui de la partie arrière 26.

Afin de rigidifier le corps de cylindre 17, il est prévu, tout autour de la partie avant 24 du corps principal 18, des nervures de rigidification 25. Le corps 18 est ouvert vers l'arrière et fermé vers l'avant.

Plus précisément la chambre hydraulique 16 est délimitée dans la partie avant 24 du corps de cylindre 17 et elle est délimitée axialement, à l'avant, par une paroi transversale avant 28 dans laquelle est formé l'orifice d'entrée 14 du fluide, et, à l'arrière, par une face transversale avant 30 du piston 20.

On peut prévoir de munir la chambre hydraulique de rainures axiales (non représentées) qui sont par exemple réalisées venues de matière par moulage avec le corps principal 18 et qui sont agencées angulairement en correspondance avec les nervures de rigidification 25. Les rainures permettent notamment de garantir une meilleure répartition de la pression de contact entre le piston 20 et le corps principal 18 et permettent également d'éviter qu'il n'y ait des surépaisseurs de matière dans le corps principal 18 au niveau des nervures 25, ce qui est particulièrement intéressant pour une pièce réalisée par moulage.

Par ailleurs, l'orifice d'entrée 14 de fluide débouche radialement dans la chambre hydraulique 16, ce qui permet de diminuer l'encombrement axial du cylindre récepteur 10.

Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par emboutissage d'une tôle métallique, par exemple en acier ou en alliage d'aluminium, mais d'autres modes de réalisation, tels que le forgeage ou le moulage, sont envisageables.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Le piston 20 étant réalisé par emboutissage, la paroi transversale 32 est formée par un repli de tôle dont la forme est complémentaire de celle de l'extrémité avant 23 de la tige de commande 22. Plus précisément, la paroi transversale 32 comporte une portion centrale sphérique, de même rayon de courbure que l'extrémité 23 de la tige de commande 22, qui est reliée à l'extrémité axiale arrière 54 de la jupe 36 par une portion conique qui autorise un léger débattement angulaire de la tige de commande 22 autour de son extrémité avant 23.

Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Le tronçon arrière 40 de la jupe 36 du piston 20 coulisse axialement dans la partie arrière 26 du corps de cylindre 17.

Plus précisément, le tronçon arrière 40 coopère avec un tube arrière de guidage 50 qui est rapporté axialement dans la partie arrière 26 du corps principal 18 et dont une surface cylindrique interne 52 est de diamètre sensiblement égal au diamètre de la surface cylindrique interne 42 de la partie avant 24 du corps principal 18.

Avantageusement le tube 50 est en matière plastique pour éviter les problèmes de dilatation différentielle entre le corps 18 et le tube 50 logé dans la partie arrière 26. C'est pour cette raison que le corps 18 est intérieurement étagé.

Le tube arrière 50 est fixé dans le corps principal 18 par collage ou par soudage et son extrémité axiale arrière 58 affleure à l'extrémité axiale arrière 60 du corps principal 18 et comporte un collet radial interne 62, qui est réalisé sous la forme d'une pièce indépendante rapportée, et qui permet de limiter vers l'arrière la course axiale du piston 20 dans le corps de cylindre 17.

Grâce au collage ou au soudage, on crée une étanchéité entre le tube 50 et le corps principal 18. Le collet 62 est formé à la faveur d'une pièce rapportée à fixation sur le tube 50. En variante il peut être d'un seul tenant avec le tube 50.

Par ailleurs, l'extrémité axiale arrière 58 du tube 50 dépasse axialement vers l'arrière au-delà de l'extrémité arrière 60 du corps principal 18 et comporte un collet radial externe 106 qui est agencé en regard de l'extrémité arrière 60 du corps principal 18.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

L'étanchéité de la chambre hydraulique 16 par rapport à l'extérieur est assurée par deux joints d'étanchéité, primaire 66 et secondaire 68, décalés axialement l'un par rapport à l'autre, qui sont portés par le corps de cylindre 17 et coopèrent avec la surface cylindrique externe 48 de la jupe annulaire 36 du piston 20.

Conformément aux enseignements de l'invention, le joint d'étanchéité primaire est réalisé sous la forme d'un joint composite 66.

Le joint composite 66 comporte essentiellement une bague interne 88 annulaire en matériau à faible coefficient de frottement tel que du «Teflon», et un anneau externe 90 en matière élastomère et il est destiné à être monté serré dans un logement cylindrique 92 formé dans la paroi transversale 78 qui délimite les parties avant 24 et arrière 26 du corps principal 18.

Le logement cylindrique 92 est d'un diamètre compris entre celui des surfaces cylindriques internes 70, 42 respectivement des parties arrière 26 et avant 24 du corps principal 18, et il débouche dans la partie arrière 26 par un chanfrein 95, facilitant la mise en place du joint composite 66 par enfilage axiale.

Comme on peut le voir plus particulièrement sur la figure 3, lorsqu'il est en position montée, le joint composite 66 est en butée axialement vers l'avant contre une face axiale avant 94 du logement 92 et il est serré radialement entre la surface cylindrique latérale du logement 92 et la surface cylindrique externe 48 du piston 20.

L'anneau externe 90 en matière élastomère permet, en se déformant, de bien maîtriser la force de serrage appliquée sur la bague interne 88 tout en rattrapant un éventuel défaut de coaxialité entre le piston 48 et le corps de cylindre 17.

On obtient de la sorte une pression de contact entre la bague interne 88 et le piston 48 qui est homogène sur toute la circonférence du piston 48 et on obtient une excellente étanchéité sans pour autant induire des forces de frottement importantes entre le piston 20 et le corps de cylindre 17.

Il est nécessaire, pour le bon fonctionnement du joint composite 66, que la bague interne 88 et l'anneau externe 90 soient agencés axialement dans le même plan et il est prévu à cet effet une rondelle annulaire d'appui 96 particulière.

La rondelle annulaire d'appui 96 est en appui par la périphérie externe 98 de sa face avant contre la face arrière 100 de la paroi transversale 78 et la périphérie interne de sa face avant possède un bossage central 102 qui permet de serrer le joint composite 66 contre la face axiale avant 94 du logement cylindrique 92.

La rondelle d'appui 96 facilite le montage du joint composite 66, ainsi que l'usinage du corps de cylindre et est elle-même maintenue axialement contre la paroi transversale 78 par l'extrémité axiale avant 74 du tube arrière de guidage 50 qui est en appui contre sa face arrière 104. Le bossage central 102 de la face avant de la rondelle d'appui 96 est relié à la périphérie externe 98 par un profil correspondant au chanfrein 95, ce qui permet d'obtenir, par leur coopération, un très bon centrage de la rondelle d'appui 96 dans le corps principal 18.

Dans l'exemple de réalisation de l'invention qui est représenté sur les figures, le joint secondaire 68 est agencé dans un logement cylindrique 76 qui est formé dans la surface cylindrique interne 52 du tube arrière 50 et qui débouche dans l'extrémité avant 74 de ce tube 50, et le joint secondaire 68 est réalisé sous la forme d'une coupelle à lèvres. Ce joint est en matériau élastomère, de manière connue.

Toutefois, le joint secondaire 68 pourrait aussi être réalisé sous la forme d'un joint composite.

En variante, on peut également prévoir que les deux joints d'étanchéité primaire 66 et secondaire 68 soient agencés dans des logements cylindriques formés à l'extrémité avant du tube arrière de guidage 50.

Selon un aspect particulièrement remarquable de l'invention, le montage d'un cylindre récepteur 10, tel que celui représenté sur les figures, est réalisé par séries d'opérations effectuées successivement dans la même direction, ce qui est particulièrement intéressant en vue de l'automatisation du montage.

Dans ce cas, le joint secondaire 68 et le piston 20 sont agencés successivement dans le tube 50 puis la rondelle d'appui particulière 96 et le joint composite sont introduits autour du piston 20 en appui contre l'extrémité axiale avant 74 du tube arrière 50.

La rondelle d'appui 96 a ainsi une double fonction car elle facilite le montage du joint secondaire 68 d'une part, et du joint composite, d'autre part.

Le corps principal 18 est alors emboîté axialement autour de ces éléments prémontés.

Lorsque le joint composite 66 arrive au contact du chanfrein 95 de son logement cylindrique 92, il est forcé à l'intérieur du logement 92 par le bossage périphérique interne 102 de la rondelle d'appui 96 jusqu'au fond du logement 92.

Le chanfrein 95 permet notamment de faciliter l'introduction du joint 66 dans le logement 92.

Une telle conception d'un cylindre récepteur 10 permet donc de réaliser une étanchéité particulièrement fiable et performante de la chambre d'étanchéité 16 tout en favorisant la facilité de montage du cylindre 10.

L'invention a été ci-dessus décrite pour un cylindre récepteur, mais on pourra transposer aisément les enseignements de l'invention pour réaliser un cylindre émetteur de structure similaire.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, manoeuvrée par la fourchette de débrayage, au contact du diaphragme.

En pressurisant la chambre 16 on déplace le piston et donc la tige 22, la fourchette de débrayage et la butée de débrayage. Lorsque le piston 30 occupe sa position reculée l'embrayage est alors désengagé.

Bien entendu le tube arrière peut être métallique.

Néanmoins il est avantageux qu'il soit en matière plastique de manière qu'il se dilate de la même manière que le corps principal 18. En outre le tube arrière 50 ainsi que le corps principal 18 sert au guidage du piston. Dans ce cas le corps principal et le tube arrière sont avantageusement en matière plastique à faible coefficient de frottement. On appréciera, lorsque le piston est embouti, que l'on réduise l'encombrement axial puisque la tige de commande pénètre à l'intérieur au moins de la spire d'extrémité du ressort 64.

Dans tous les cas le tube arrière 50 s'engage à la manière d'un bouchon dans le corps principal 18.

Bien entendu on peut prévoir un joint torique entre la périphérie interne du corps principal 18 et la périphérie externe du tube arrière, ledit joint étant monté par exemple dans une gorge du corps principal.

Toute fuite est ainsi évitée à ce niveau.

Bien entendu on peut prévoir sur le piston des patins de guidage, en matière à faible coefficient de frottement, et la présence du deuxième joint 68 n'est pas obligatoire, ce deuxième joint étant là pour réaliser une étanchéité parfaite en cas de fuite au niveau du premier joint.

## Revendications

1. Dispositif de commande hydraulique d'un embrayage de véhicule automobile, du type comportant au moins un cylindre (10) de commande, du type dans lequel le cylindre (10) comporte un corps de cylindre (17) sensiblement tubulaire dans lequel coulisse axialement un piston (20) qui délimite, par une face transversale avant (30), une chambre hydraulique (16) cylindrique et qui coopère, par une face arrière (34), avec une tige de piston (22), et du type dans lequel un orifice (14) de raccordement d'une canalisation (12) débouche dans la chambre hydraulique (16) et du type dans lequel le corps de cylindre (17) réalisé en deux parties, qui comprennent un corps principal étagé (18) et un tube arrière de guidage (50), qui est rapporté dans une partie arrière du corps principal (18) et qui participe au guidage du piston (20) dans le cylindre (10) caractérisé en ce qu'il est prévu un joint composite (66) qui est porté par le corps principal (18) et qui coopère avec une paroi latérale cylindrique (36) du piston (20) pour assurer l'étanchéité de la chambre hydraulique (16), et en ce que le joint composite (66) comporte une bague interne (88) en matériau à faible coefficient de frottement qui est serrée radialement contre la paroi latérale (36) du piston (20) par un anneau externe (90) en matériau élastomère reçu dans un logement (92) du corps principal (18).

2. Dispositif selon la revendication 1, caractérisé en ce que l'anneau externe (90) est monté comprimé radialement dans le logement (92) du corps principal (18).

3. Dispositif selon la revendication 2, caractérisé en ce que le logement (92) du joint composite (66) est délimité radialement par une surface cylindrique latérale et axialement, selon une première direction ; par une face axiale (94) qui s'étend radialement vers l'intérieur depuis la surface latérale, et, selon la direction opposée, par une rondelle d'appui (96) qui immobilise axialement le joint composite (66) dans le logement (92).

4. Dispositif selon la revendication 3, caractérisé en ce que le corps principal (18) comporte une partie avant (26), qui délimite la chambre hydraulique (16), et une partie arrière (28) de diamètre élargi, et en ce que les deux parties (26, 28) sont délimitées par une paroi transversale annulaire (78) du corps principal (18) dans laquelle est formé le logement (92) du joint composite (66).

5. Dispositif selon la revendication 4, caractérisé en ce que la face axiale (94) du logement (92) du joint composite (66) est agencée à l'avant du logement (92) et en ce que la surface cylindrique du logement (92) débouche, à l'arrière, dans une face arrière (100) de la paroi transversale annulaire (78) par une extrémité chanfreinée (95).

6. Dispositif selon la revendication 5, caractérisé en ce que la rondelle d'appui (96) comporte sur sa face avant (98) un bossage (102) qui est délimité par une portée conique complémentaire de l'extrémité chanfreinée (95) du logement (92) de sorte que le bossage (102) pénètre dans le logement (92) pour immobiliser axialement le joint composite (66) dans son logement (92).

7. Dispositif selon la revendication 6, caractérisé en ce que le bossage (102) de la rondelle d'appui (96) coopère avec l'extrémité chanfreinée (95) du logement (92) pour centrer la rondelle (96) dans le corps principal (18).

8. Dispositif selon l'une quelconque des revendications 5 à 7, caractérisé en ce que, pour l'assemblage du cylindre (10), le joint composite (66) et la rondelle d'appui (96) sont montés sur le piston (20) et le piston (20) est introduit axialement d'arrière en avant dans le corps principal, et en ce que le piston (20) et la rondelle (96) sollicitent le joint (66) pour le forcer à l'intérieur de son logement (92).

9. Dispositif selon l'une quelconque des revendications précédentes, caractérisé en ce que le tube arrière de guidage (50) du corps de cylindre (17) porte un deuxième joint d'étanchéité (68) qui coopère avec la paroi latérale (36) du piston (20) et qui est agencé axialement à l'arrière du joint composite (66).

10. Dispositif selon la revendication 9, caractérisé en ce que le deuxième joint (68) est aussi un joint composite.

11. Dispositif selon la revendication 9, caractérisé en ce que le deuxième joint (68) est une coupelle d'étanchéité à lèvre à frottement radial.

12. Dispositif selon l'une quelconque des revendications précédentes, caractérisé en ce que le corps de cylindre (17) est réalisé en matière plastique et en ce que le piston est réalisé en métal (20).

## Patentansprüche

1. Hydraulische Betätigungsvorrichtung einer Kraftfahrzeugkupplung, umfassend wenigstens einen Betätigungszylinder (10), wobei der Zylinder (10) einen in etwa rohrförmigen Zylinderkörper (17) umfaßt, in dem axial gleitend ein Kolben (20) gelagert ist, der durch eine vordere Querfläche (30) eine zylindrische Hydraulikkammer (16) begrenzt und der durch eine rückseitige Fläche (34) mit einer Kolbenstange (22) zusammenwirkt, und wobei eine Anschlußöffnung (14) für eine Leitung (12) in der Hydraulikkammer (16) mündet, wobei der Zylinderkörper (17) aus zwei Teilen besteht, die einen abgestuften Hauptkörper (18) und ein hinteres Führungsrohr (50) umfassen, das in einem hinteren Teil des Hauptkörpers (18) angefügt ist und das an der Führung des Kolbens (20) im Zylinder (10) mitwirkt, **dadurch gekennzeichnet,** daß eine Verbunddichtung (66) vorgesehen ist, die am Hauptkörper (18) angebracht ist und die mit einer zylindrischen Seitenwand (36) des Kolbens (20) zusammenwirkt, um die Abdichtung der Hydraulikkammer (16) herbeizuführen, und daß die Verbunddichtung (66) eine innere Buchse (88) aus einem Werkstoff mit niedrigem Reibungskoeffizienten umfaßt, die radial an der Seitenwand (36) des Kolbens (20) durch einen Außenring (90) aus Elastomermaterial eingespannt wird, der in einer Aufnahme (92) des Hauptkörpers (18) eingesetzt ist.

2. Vorrichtung nach Anspruch 1, **dadurch gekennzeichnet,** daß der Außenring (90) radial zusammengedrückt in der Aufnahme (92) des Hauptkörpers (18) gelagert ist.

3. Vorrichtung nach Anspruch 2, **dadurch gekennzeichnet**, daß die Aufnahme (92) der Verbunddichtung (66) radial durch eine zylindrische Seitenfläche und axial entlang einer ersten Richtung durch eine axiale Fläche (94), die sich von der Seitenfläche aus radial nach innen erstreckt, und entlang der entgegengesetzten Richtung durch eine Auflagescheibe (96) begrenzt wird, die die Verbunddichtung (66) axial in der Aufnahme (92) sichert.

4. Vorrichtung nach Anspruch 3, **dadurch gekennzeichnet,** daß der Hauptkörper (18) einen vorderen Teil (26), der die Hydraulikkammer (16) begrenzt, und einen hinteren Teil (28) mit erweitertem Durchmesser umfaßt und daß die beiden Teile (26, 28) durch eine ringförmige Querwand (78) des Hauptkörpers (18) begrenzt werden, in dem die Aufnahme (92) der Verbunddichtung (66) ausgebildet ist.

5. Vorrichtung nach Anspruch 4, **dadurch gekennzeichnet,** daß die axiale Fläche (94) der Aufnahme (92) der Verbunddichtung (66) an der Vorderseite der Aufnahme (92) angeordnet ist und daß die zylindrische Fläche der Aufnahme (92) hinten durch ein abgeschrägtes Ende (95) in einer rückseitigen Fläche (100) der ringförmigen Querwand (78) mündet.

6. Vorrichtung nach Anspruch 5, **dadurch gekennzeichnet,** daß die Auflagescheibe (96) an ihrer Vorderseite (98) einen Vorsprung (102) umfaßt, der durch eine zum abgeschrägten Ende (95) der Aufnahme (92) passende konische Auflagefläche begrenzt wird, so daß der Vorsprung (102) in die Aufnahme (92) eindringt, um die Verbunddichtung (66) in ihrer Aufnahme (92) axial zu sichern.

7. Vorrichtung nach Anspruch 6, **dadurch gekennzeichnet,** daß der Vorsprung (102) der Auflagescheibe (96) mit dem abgeschrägten Ende (95) der Aufnahme (92) zusammenwirkt, um die Auflagescheibe (96) im Hauptkörper (18) zu zentrieren.

8. Vorrichtung nach einem der Ansprüche 5 bis 7, **dadurch gekennzeichnet,** daß beim Zusammenbau des Zylinders (10) die Verbunddichtung (66) und die Auflagescheibe (96) am Kolben (20) angebracht werden und der Kolben (20) axial von hinten nach vorn in den Hauptkörper eingesetzt wird und daß der Kolben (20) und die Auflagescheibe (96) die Dichtung (66) beaufschlagen, um sie in das Innere ihrer Aufnahme (92) zu drücken.

9. Vorrichtung nach einem der vorangehenden Ansprüche, **dadurch gekennzeichnet,** daß das hintere Führungsrohr (50) des Zylinderkörpers (17) eine zweite Dichtung (68) trägt, die mit der Seitenwand (36) des Kolbens (20) zusammenwirkt und die axial an der Rückseite der Verbunddichtung (66) angeordnet ist.

10. Vorrichtung nach Anspruch 9, **dadurch gekennzeichnet,** daß die zweite Dichtung (68) ebenfalls eine Verbunddichtung ist.

11. Vorrichtung nach Anspruch 9, **dadurch gekennzeichnet,** daß die zweite Dichtung (68) ein Lippendichtungsteller mit radialer Reibung ist.

12. Vorrichtung nach einem der vorangehenden Ansprüche, **dadurch gekennzeichnet,** daß der Zylinderkörper (17) aus Kunststoff ausgeführt ist und daß der Kolben (20) aus Metall ausgeführt ist.

## Claims

1. An hydraulic control device for a motor vehicle clutch of the type comprising at least one control cylinder (10), of the type in which the cylinder (10) includes a substantially tubular cylinder body (17) in which there slides axially a piston (20) which defines, by a front transverse face (30), a cylindrical hydraulic chamber (16), and which cooperates through a rear face (34) with a piston rod (22), and of the type in which an orifice (14) for connection of a duct (12) is open into the hydraulic chamber (16), and of the type in which the cylinder body (17) is made in two parts, which comprise a stepped main body (18) and a rear guide tube (50) which is fitted within a rear portion of the main body (18) and which participates in the guiding of the piston (20) in the cylinder (10), characterised in that a composite seal (66) is provided which is carried by the main body (18) and cooperates with a cylindrical side wall (36) of the piston (20) so as to seal the hydraulic chamber (16), and in that the composite seal (66) comprises an inner ring (88) of material having a low coefficient of friction, which is clamped radially against the side wall (36) of the piston (20) by an outer ring (90) of elastomeric material, which is received in a housing (92) of the main body (18).

2. A device according to Claim 1, characterised in that the outer ring (90) is mounted in radial compression in the housing (92) of the main body (18).

3. A device according to Claim 2, characterised in that the housing (92) for the composite seal (66) is bounded radially by a cylindrical side surface and axially, in a first direction by an axial face (94) that extends radially inwards from the side surface, and in the opposite direction by a thrust ring (96) which immobilises the composite seal (66) axially in the housing (92).

4. A device according to Claim 3, characterised in that the main body (18) has a front portion (26) which bounds the hydraulic chamber (16), and a rear portion (28) of increased diameter, and in that the two portions (26, 28) are delimited by an annular transverse wall (78) of the main body (18), in which the housing (92) for the composite seal (66) is formed.

5. A device according to Claim 4, characterised in that the axial face (94) of the housing (92) for the composite seal (66) is located at the front of the housing (92), and in that the cylindrical surface of the housing (92) is open at the rear in a back face (100) of the annular transverse wall (78) through a chamfered end (95).

6. A device according to Claim 5, characterised in that the thrust ring (96) includes on its front face (98) a boss (102) which is delimited by a conical surface complementary to the chamfered end (95) of the housing (92), in such a way that the boss (102) penetrates into the housing (92) whereby to immobilise the composite seal (66) axially in its housing (92).

7. A device according to Claim 6, characterised in that the boss (102) of the thrust ring (96) is in cooperation with the chamfered end (95) of the housing (92) so as to centre the ring (96) in the main body (18).

8. A device according to any one of Claims 5 to 7, characterised in that, for assembly of the cylinder (10), the composite seal (66) and the thrust ring (96) are mounted on the piston (20), and the piston (20) is introduced axially forward from the rear into the main body, and in that the piston (20) and the ring (96) exert a force on the seal (66) so as to force it into the interior of its housing (92).

9. A device according to any one of the preceding Claims, characterised in that the rear guide tube (50) of the cylinder body (17) carries a second seal (68) which is in cooperation with the side wall (36) of the piston (20), and which is located axially at the back of the composite seal (66).

10. A device according to Claim 9, characterised in that the second seal (68) is also a composite seal.

11. A device according to Claim 9, characterised in that the second seal (68) is a sealing cup with a radial friction lip.

12. A device according to any one of the preceding Claims, characterised in that the cylinder body (17) is made of plastics material, and in that the piston (20) is made of metal.
